# EUROPÄISCHE PATENTSCHRIFT

(11) **EP 1 499 825 B1**
(45) Veröffentlichungstag und Bekanntmachung des Hinweises auf die Patenterteilung: **25.02.2009**
(21) Anmeldenummer: 03722292.4
(22) Anmeldetag: 22.04.2003
(51) Int. Cl.: F16K 37/00, G01M 3/24

(54) **DIAGNOSESYSTEM UND -VERFAHREN FÜR EIN VENTIL**
DIAGNOSTIC SYSTEM AND METHOD FOR A VALVE
SYSTEME ET PROCEDE DE DIAGNOSTIQUE POUR UNE VANNE

(30) Priorität: 26.04.2002 DE 10218830
(43) Veröffentlichungstag der Anmeldung: 26.01.2005
(73) Patentinhaber: SIEMENS AKTIENGESELLSCHAFT, 80333 München (DE)
(72) Erfinder: PÜTTMER, Alf, 76185 Karlsruhe (DE); ENS, Wolfgang, 76351 Linkenheim (DE)
(86) Internationale Anmeldenummer: PCT/DE2003/001312
(87) Internationale Veröffentlichungsnummer: WO 2003/091614

(56) Entgegenhaltungen:
- EP-A- 1 134 571
- DE-A- 19 924 377
- DE-A- 19 947 129
- US-A- 6 134 949

## Beschreibung

Die Erfindung betrifft ein Diagnosesystem sowie ein Diagnoseverfahren für ein von einem Stellungsregler über einen Antrieb betätigbares Ventil nach dem Oberbegriff des Anspruchs 1 bzw. dem Oberbegriff des Anspruchs 4.

In vielen Bereichen der Prozess- und Energietechnik hängt der störungsfreie Betrieb einer Anlage von der einwandfreien Funktion der eingesetzten Steuer- und Sperrventile ab. Zur Vermeidung kostenintensiver, irregulärer Betriebsunterbrechungen sollten Ventilschäden möglichst bereits im Anfangsstadium erkannt werden, d. h. bevor ein Ausfall eines Ventils einen Stillstand der Anlage verursachen kann. Beispielsweise führen defekte Ventilsitze zu Leckströmungen, die eine breitbandige Schallemission erzeugen. Eine Aufnahme und Auswertung der Schallemission eines Ventils kann somit zur Früherkennung von Ventilschäden dienen. Da Ventilfehler zu Schäden und teuren Folgekosten führen können, ist eine Diagnose evtl. mit automatischer Erfassung und programmierbarer Bewertung der Fehler von großem Nutzen. Statistische Auswertungen der Diagnosedaten können sowohl zur Optimierung der Wartungsprozesse für einen rechtzeitigen Ersatz eines schadhaften Ventils als auch zur qualitativen Beurteilung und Klassifizierung der Ventilhersteller oder zur Beurteilung der Eignung bestimmter Ventile für verschiedene Prozessarten dienen.

Aus der DE 199 24 377 A1 ist ein Diagnosesystem für ein von einem Stellungsregler über einen Antrieb betätigbares Ventil bekannt, das eine Einrichtung zur Erfassung, Speicherung und Auswertung von an dem Ventil gemessenen Körperschallspektren aufweist. Um eine besonders zuverlässige Ventildiagnose zu ermöglichen, ist in der Einrichtung zur Erfassung, Speicherung und Auswertung ein bei geringfügig geöffnetem, intaktem Ventil erfasstes Körperschallspektrum abspeicherbar. Zur Diagnose wird ein bei geschlossenem Ventil erfasstes Körperschallspektrum mit dem abgespeicherten verglichen und die Ähnlichkeit als ein Kriterium für die Undichtigkeit des Ventils herangezogen.

Ein weiteres Diagnosesystem für ein Ventil ist aus der DE 199 47 129 A1 bekannt.

Der Erfindung liegt die Aufgabe zugrunde, ein Diagnosesystem und ein Diagnoseverfahren zu schaffen, die sich durch eine verbesserte Zuverlässigkeit des Diagnoseergebnisses auszeichnen.

Zur Lösung dieser Aufgabe weist das neue Diagnosesystem der eingangs genannten Art die im kennzeichnenden Teil des Anspruchs 1 bzw. das Diagnoseverfahren die im kennzeichnenden Teil des Anspruchs 4 angegebenen Merkmale auf. In den Unteransprüchen sind vorteilhafte Weiterbildungen beschrieben.

Für eine zuverlässige Detektion von Leckströmungen anhand einer Messung der akustischen Emission sind ein Messsignal, das den Grundschall des Ventils in geschlossener Stellung und ein Messsignal, das der Schallemission bei einer kleinen Leckage des Ventils entspricht, erwünscht. Der Grundschall wird gemessen, indem das intakte Ventil bei einer Kalibrierung geschlossen wird und somit keinerlei Strömungsgeräusche auftreten können. Ursachen für den Grundschall sind im Wesentlichen Betriebsgeräusche des Ventilantriebs sowie über Rohrleitungen von benachbarten Pumpen in der prozesstechnischen Anlage eingekoppelter Körperschall. Ein Messsignal, das sehr gut dem Körperschall bei einer kleinen Leckage des Ventils entspricht, wird aufgenommen, indem die Leckage durch einen kleinen Ventilspalt simuliert wird. Die Erfindung beruht nun auf der Erkenntnis, dass ein Ventil fälschlicherweise als gut, d. h. als leckagefrei, beurteilt werden könnte, wenn bei geschlossenem Zustand kein verdächtiger Schall entsteht, da beispielsweise der Druckabfall über dem Ventil nicht ausreichend hoch ist. In diesem Fall könnte jedoch allenfalls als Diagnoseergebnis angezeigt werden, dass derzeit keine Diagnoseaussage bezüglich einer Leckagedetektion mittels Körperschall möglich ist. Zur Verbesserung der Zuverlässigkeit von Diagnoseaussagen sollten daher die folgenden Randbedingungen erfasst werden:
1) Das Ventil muss für eine Leckagedetektion anhand des Körperschalls geschlossen sein,
2) der Druck vor dem Ventil und
3) der Druck hinter dem Ventil sollten bekannt sein, wobei prinzipiell anstelle von 2) und 3) die Kenntnis des Druckabfalls über dem Ventil alternativ ausreichen würde,
4) die Eigenschaften des Mediums, welche das Schallsignal beeinflussen, sollten bekannt sein.

Zusätzlich werden zur Diagnose, wie bereits oben beschrieben, der Grundschall des geschlossenen Ventils unter normalen Betriebsbedingungen und ein durch einen kleinen Ventilspalt simulierter Leckageschall sowie selbstverständlich der momentane Schall bei geschlossenem Ventil benötigt. Der Grundschall wird gemessen, indem das neue, intakte Ventil in der prozesstechnischen Anlage geschlossen wird, so dass keinerlei Strömungsgeräusche auftreten können. Der Leckageschall ist ebenso wie der simulierte Leckageschall stark von den Randbedingungen 2) bis 4) abhängig. Prinzipiell wäre es möglich, vor und hinter dem Ventil zur Bestimmung der Randbedingungen 2) bzw. 3) jeweils Drucksensoren vorzusehen, die den aktuellen Druck erfassen. Durch Messreihen unter jeweils verschiedenen Einstellungen der Randbedingungen 2) bis 4) bei den einzelnen Messungen könnte die Abhängigkeit des Leckageschalls von den Randbedingungen 2) bis 4) in einer Kalibrierung bestimmt und hinterlegt werden. Die Durchführung der Messreihen und zwei Druckmessgeräte zur Erfassung der jeweiligen Betriebsbedingung würden jedoch einen erheblichen Aufwand bedeuten.

Die Randbedingung 1) kann durch einen üblicherweise vorhandenen Positionsgeber erfasst werden oder wird eine vorgegebene Zeit nach dem Schließen des Ventils als erfüllt angenommen.

Die Erfindung hat den Vorteil, dass bei der Kalibrierung lediglich der Grundschall bei geschlossener Stellung des Ventils aufgenommen und ausgewertet werden muss. Ein simulierter Leckageschall wird nicht bei der Kalibrierung, sondern im Betrieb aufgenommen, d. h. in zeitlicher Nähe zur Aufnahme des Schallsignals bei geschlossenem Ventil, das zur Detektion einer Leckage ausgewertet wird. Aufgrund des geringen zeitlichen Abstands zwischen der Aufnahme des simulierten Leckageschalls und der Aufnahme des Schallsignals bei geschlossenem Ventil kann von vergleichbaren Randbedingungen 2) bis 4) bei den beiden Messungen ausgegangen werden. Damit wird die Zuverlässigkeit einer Diagnoseaussage erhöht. Zudem zeichnet sich die Erfindung durch einen geringeren Aufwand bei der Kalibrierung aus, da hier lediglich der Grundschall erfasst werden muss und Messgeräte zur Erfassung der Randbedingungen nicht erforderlich sind.

Die Zuverlässigkeit der Diagnoseaussage wird dadurch weiter erhöht, dass nur dann eine Gut- oder Schlechtaussage ausgegeben wird, wenn sich der simulierte Leckageschall ausreichend vom bei der Kalibrierung aufgenommenen Grundschall unterscheidet. Wenn dies nicht der Fall ist, wird ein Meldesignal erzeugt zur Anzeige, dass derzeit keine Diagnose einer Leckage möglich ist. Ursache dafür kann beispielsweise sein, dass der Druckabfall über dem Ventil nicht ausreicht, um bei einer Leckage deutlich detektierbare Strömungsgeräusche zu erzeugen. Eine Diagnoseaussage wird somit nur dann getroffen, wenn diese in der jeweiligen Betriebsphase aufgrund geeigneter Randbedingungen möglich ist. Nur in diesem Fall wird somit ein Fehlermeldesignal, das eine detektierte Leckströmung anzeigt, erzeugt, sofern sich das bei geschlossener Stellung des Ventils im Betrieb aufgenommene Messsignal des Körperschalls deutlich vom Grundschall in Richtung des simulierten Leckageschalls unterscheidet. Unterscheidet sich der Verlauf des Messsignals bei geschlossenem Ventil jedoch nur geringfügig vom Grundschall, so wird kein Fehler gemeldet oder es wird angezeigt, dass keine Leckage am Ventil vorhanden ist.

Wenn zur Erfassung des simulierten Leckageschalls weitere Verläufe des Messsignals jeweils in verschiedenen Abschnitten des Ventilstellbereichs nahe bei geschlossener Stellung des Ventils während eines Schließvorgangs und/oder während eines Öffnungsvorgangs aufgenommen und zur Diagnose ausgewertet werden, so hat dies den Vorteil, dass die Zuverlässigkeit der Diagnoseaussage weiter erhöht wird. Aufgrund der Toleranzen des Ventils und des Antriebs sowie aufgrund einer evtl. vorhandenen Weichdichtung im Ventil ist es nämlich äußerst schwierig, einen derart kleinen Spalt in der Weise zu erzeugen, dass er einem kleinen Leck des Ventils entspricht. Dies wird durch die beschriebene Maßnahme in vorteilhafter Weise erleichtert. Die Unterscheidung nach Abschnitten des Ventilstellbereichs kann beispielsweise dadurch erfolgen, dass ein kontinuierlich während eines Schließ- oder Öffnungsvorgangs aufgezeichnetes Messsignal anschließend in einer Auswerteeinrichtung nach Zeitbereichen unterteilt wird. Alternativ dazu ist es möglich, während eines Schließ- oder Öffnungsvorgangs in vorgebbaren Zeitabständen mehrere Verläufe des Messsignals mit jeweils kurzen Intervallen aufzunehmen, von denen dann zumindest einige Messsignalverläufe darstellen, die in verschiedenen Abschnitten des Ventilstellbereichs nahe bei geschlossener Stellung des Ventils aufgenommen sind. Diese stellen dann simulierte Verläufe für verschiedene Leckraten dar.

Die Zuverlässigkeit der Fehleraussage kann vorteilhaft weiter erhöht werden, wenn von mehreren Kenngrößen, die zur Charakterisierung des Verlaufs des Messsignals herangezogen werden können, diejenige ausgewählt wird, bei welcher sich der erste Wert von dem zweiten Wert am deutlichsten unterscheidet. Beispiele für derartige Kenngrößen sind die Amplitude, der Spitzenwert, der Effektivwert oder der Scheitelfaktor des jeweiligen Zeitverlaufs sowie die Amplitude in einem oder in mehreren Frequenzbändern des Spektrums oder die spektrale Leistungsdichte. Der Scheitelfaktor wird dabei als das Verhältnis des Spitzenwerts zum Effektivwert berechnet. Die Kenngröße kann selbstverständlich ebenso durch eine Verknüpfung, beispielsweise durch Fuzzy Logik oder ein neuronales Netz, der genannten oder anderer geeigneter Größen ermittelt werden.

Das Diagnosesystem ist vorzugsweise als integraler Bestandteil des Stellungsreglers ausgebildet, so dass die Diagnose des Ventils über die Datenschnittstelle des Stellungsreglers veranlasst und das Ergebnis der Diagnose als Fehlermeldesignal in Form einer Gut- oder Schlechtaussage über diese Datenschnittstelle ausgegeben werden kann. Selbstverständlich ist auch eine Anzeige über Meldelampen, beispielsweise Grün für "keine Leckage detektiert", Gelb für "keine Diagnose einer Leckage möglich" und Rot für "Leckströmung detektiert", direkt am Stellungsregler möglich.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: einen prinzipiellen Aufbau eines Regelventils mit einem Diagnosesystem und
- Figur 2: Beispiele verschiedener Schallspektren.

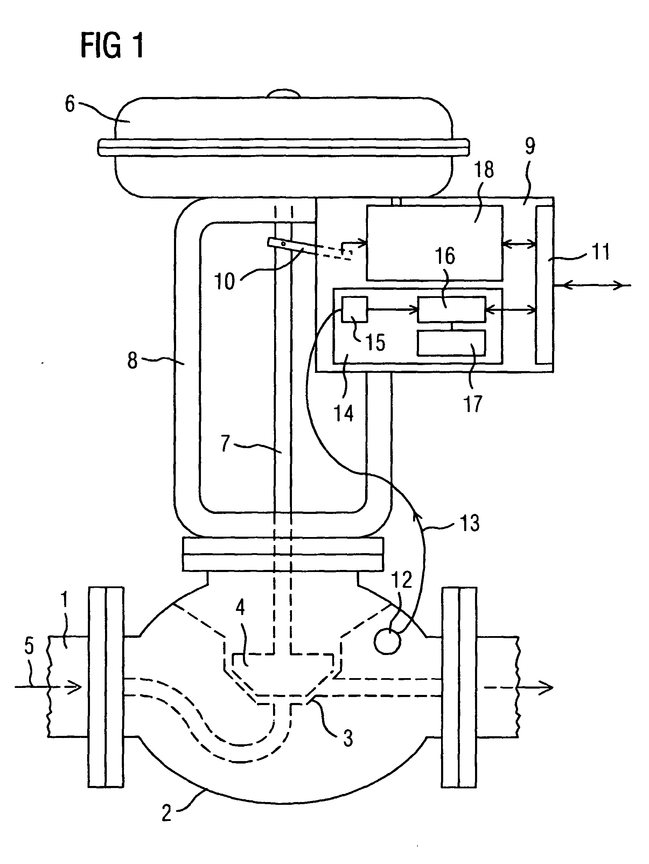

In einer Rohrleitung 1 einer nicht weiter dargestellten prozesstechnischen Anlage ist gemäß Figur 1 ein Ventil 2 eingebaut, das durch einen entsprechenden Hub eines mit einem Ventilsitz 3 zusammenwirkenden Schließkörpers 4 den Durchfluss eines Mediums 5 steuert. Der Hub wird durch einen pneumatischen Antrieb 6 erzeugt und mittels einer Ventilstange 7 auf den Schließkörper 4 übertragen. Der Antrieb 6 ist über ein Joch 8 mit dem Gehäuse des Ventils verbunden. An dem Joch 8 ist ein Stellungsregler 9 mit einer Regeleinheit 18 angebracht, die eingangsseitig über ein an der Ventilstange 7 angreifendes Verbindungsstück 10 den Hub erfasst, diesen mit einem über eine Datenschnittstelle 11 von einem Feldbus zugeführten Sollwert vergleicht und ausgangsseitig den pneumatischen Antrieb 6 im Sinne einer Ausregelung der Regeldifferenz steuert. An dem Gehäuse des Ventils 2 ist ein Aufnehmer 12 für Körperschall angebracht, dessen Signal 13 als Messsignal einer Einrichtung 14 zur Auswertung des aufgenommenen Messsignals 13 zugeführt wird. Diese Einrichtung 14 ist bei dem gezeigten Ausführungsbeispiel Bestandteil des Stellungsreglers 9, kann aber alternativ von diesem getrennt ausgebildet sein. Die Einrichtung 14 enthält eine Signalaufbereitungsschaltung 15, in der das Messsignal 13 des Schallaufnehmers 12 verstärkt, gefiltert und digitalisiert wird. In einer nachgeordneten Recheneinheit 16 wird aus dem aufbereiteten Signal 13 beispielsweise durch eine Fast-Fourier-Transformation zusätzlich das Frequenzspektrum ermittelt. Dieses kann je nach Anforderung in einem Speicher 17 abgespeichert oder weiter ausgewertet werden, um Informationen über den Zustand des Ventils 2 zu erhalten. Die Diagnose des Ventils wird periodisch ausgeführt oder über die Datenschnittstelle 11 veranlasst, über die auch das Ergebnis der Diagnose abfragbar ist.

Alternativ zu dem gezeigten Ausführungsbeispiel können einzelne Funktionen der Auswertung aus der Einrichtung 14 in einen an den Feldbus angeschlossenen Personal Computer ausgelagert und ein digitalisiertes Messsignal oder Kenngrößen des Messsignals beschreibende Daten an diesen über die Datenschnittstelle 11 übertragen werden.

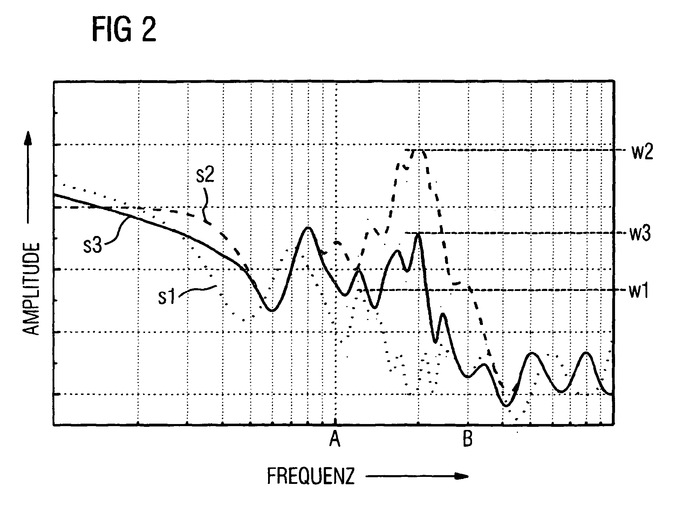

Bei einer Kalibrierung wird das Ventil 2 durch den Stellungsregler 9 geschlossen. Bei vollständig geschlossenem Ventil wird ein Verlauf des Messsignals 13 aufgenommen und anhand des Verlaufs des Messsignals 13 ein erster Wert w1 bestimmt, wie im Folgenden anhand Figur 2 verdeutlicht. Auf der Abszisse des in Figur 2 dargestellten Diagramms ist die Frequenz, auf der Ordinate die spektrale Leistungsdichte aufgetragen. Es handelt sich um eine lediglich qualitative Darstellung, in welcher auf Maßstabsangaben verzichtet wurde. Der Wert w1 entspricht hier dem Scheitelwert eines spektralen Verlaufs s1 der Leistungsdichte des Grundschalls in einem Frequenzband zwischen Grenzfrequenzen A und B, der mittels Fast-Fourier-Transformation aus dem aufgenommenen Verlauf des Messsignals berechnet wurde. Der Scheitelwert der Leistungsdichte in einem durch die Frequenzen A und B begrenzten Frequenzband wird somit in dem gezeigten Ausführungsbeispiel als Kenngröße verwendet. Der bei der Kalibrierung aufgenommene Verlauf des Messsignals wird abgespeichert, damit im späteren Betrieb alternativ zu dieser Kenngröße Werte anderer Kenngrößen ermittelbar und zur weiteren Diagnose auswertbar sind, bezüglich deren sich im Betrieb aufgenommene Verläufe deutlicher von dem bei der Kalibrierung aufgenommenen Verlauf unterscheiden. Im späteren Betrieb des Ventils werden mehrere Verläufe des Messsignals bei einem vorzugsweise langsamen Schließvorgang aufgenommen und abgespeichert. Erfolgt dieser Schließvorgang langsam genug und werden die Messungen ausreichend häufig vorgenommen, so können Verläufe bei sehr kleinen Ventilöffnungen erfasst werden. Anhand der abgespeicherten Verläufe des Messsignals werden zu den verschiedenen Abschnitten des Ventilstellbereichs jeweils Werte der Kenngröße, im gezeigten Ausführungsbeispiel Werte des Scheitelwerts der spektralen Leistungsdichte im Frequenzband zwischen den Grenzfrequenzen A und B, ermittelt. Für eine weitergehende Auswertung zur Ventildiagnose wird derjenige Wert der weiteren Werte als zweiter Wert der Kenngröße ausgewählt, der sich vom ersten Wert am deutlichsten unterscheidet. In Figur 2 sind der zugehörige spektrale Verlauf s2 und der Wert w2 der Kenngröße eingezeichnet. Der Verlauf s2 stellt das Spektrum eines simulierten Leckageschalls dar. Liegt der zweite Wert w2 wenigstens um z. B. den Faktor 1,5 über dem ersten Wert w1, so wird festgestellt, dass unter den herrschenden Betriebsbedingungen eine Leckagedetektion des Ventils möglich ist. Würde die Abweichung des ersten Werts w1 vom zweiten Wert w2 weniger als die Hälfte des Werts w1 betragen, so würde ein Meldesignal zur Anzeige erzeugt, das unter den herrschenden Betriebsbedingungen keine Diagnose einer Leckage möglich ist. In dem beschriebenen Beispiel wurde somit ein erster Schwellwert als die Hälfte des ersten Werts w1 vorgegeben.

Alternativ zur beschriebenen Ermittlung des zweiten Werts der Kenngröße anhand mehrerer weiterer Werte kann selbstverständlich auch der zweite Wert direkt aus einem Verlauf des Messsignals ermittelt werden, der unmittelbar bei einer Ventilstellung mit einem derart kleinen Spalt aufgenommen wurde, dass er einem kleinen Leck des Ventils entspricht.

In Abhängigkeit des ersten Werts w1 und des zweiten Werts w2 kann nun ein zweiter Schwellwert bestimmt werden, durch welchen festgelegt wird, ab wann bei geschlossener Ventilstellung auf das Vorliegen einer Leckage geschlossen werden soll. Das Ventil wird entweder, weil es durch den Prozess gefordert wird, oder lediglich zu Diagnosezwecken im Betrieb der prozesstechnischen Anlage geschlossen. Dabei wird ein dritter Verlauf des Messsignals mit einem spektralen Verlauf s3 der Leistungsdichte aufgenommen. Daraus wird ein dritter Wert w3 der Kenngröße ermittelt. Da die Abweichung des dritten Werts w3 vom ersten Wert w1 den zweiten Schwellwert, beispielsweise das 0,2fache des ersten Werts w1, übersteigt, wird bei dem anhand Figur 2 verdeutlichten Beispiel das Vorliegen einer Leckage des Ventils festgestellt und über die Datenschnittstelle 11 (Figur 1) ein Fehlersignal ausgegeben, das in einer übergeordneten Prozesssteuerung beispielsweise zur Anzeige eines Wartungsbedarfs verarbeitet wird.

Alternativ zu diesem Ausführungsbeispiel kann die Einrichtung 14 auch derart ausgebildet werden, dass zur Diagnose diejenige Kenngröße aus einer vorgegebenen Menge von Kenngrößen ausgewählt wird, deren erster Wert sich von zumindest einem der weiteren Werte am deutlichsten unterscheidet. Als Beispiele für Kenngrößen seien die Amplitude, der Spitzenwert, der Effektivwert oder der Scheitelfaktor des Messsignalverlaufs genannt. Weitere Beispiele sind die bereits angeführte Leistungsdichte in verschiedenen Frequenzbändern oder die Amplitude spektraler Signalanteile.

Eine weitere Alternative ist darin zu sehen, dass bei der Kalibrierung die Verläufe des Messsignals in verschiedenen Abschnitten des Ventilstellbereichs während eines Öffnungsvorgangs oder während eines kombinierten Schließ- und Öffnungsvorgangs aufgenommen werden. Die Reihenfolge der Aufnahme des zweiten und dritten Verlaufs und der weiteren Verläufe des Messsignals kann beliebig gewählt werden. Der Gebrauch des Zahlwortes dient lediglich zur klareren Bezeichnung.

## Patentansprüche

1. Diagnosesystem für ein von einem Stellungsregler (9) über einen Antrieb (6) betätigbares Ventil (2)
mit einem Aufnehmer (12) für Körperschall und
mit einer Einrichtung (14) zur Auswertung des aufgenommenen Messsignals (13) des Körperschalls, **dadurch gekennzeichnet, dass** die Einrichtung (14) zur Auswertung derart ausgebildet ist, dass in der Einrichtung (14) bei einer Kalibrierung anhand eines ersten, bei geschlossener Stellung des Ventils (2) aufgenommenen Verlaufs des Messsignals (13) ein erster Wert (w1) einer Kenngröße ermittelbar ist,
dass im Betrieb des Ventils anhand zumindest eines zweiten, in einem Abschnitt des Ventilstellbereichs nahe bei geschlossener Stellung des Ventils (2) aufgenommenen Verlaufs zumindest ein zweiter Wert (w2) der Kenngröße und anhand eines dritten, bei geschlossener Stellung des Ventils (2) aufgenommenen Verlaufs des Messsignals (13) ein dritter Wert (w3) der Kenngröße ermittelbar sind,
dass ein Meldesignal erzeugbar ist zur Anzeige, dass keine Diagnose einer Leckage möglich ist, wenn die Abweichung des zweiten Werts vom ersten Wert einen vorgebbaren ersten Schwellwert nicht überschreitet,
dass in Abhängigkeit des ersten Werts (w1) und des zweiten Werts (w2) ein zweiter Schwellwert für eine zulässige Abweichung des dritten Werts (w3) vom ersten Wert (w1) bestimmbar ist und
dass durch die Einrichtung (14) ein Fehlermeldesignal erzeugbar ist, wenn die Abweichung des zweiten Werts (w2) vom ersten Wert (w1) den ersten Schwellwert überschreitet und wenn die Abweichung des dritten Werts (w3) vom ersten Wert (w1) den zweiten Schwellwert übersteigt.

2. Diagnosesystem nach Anspruch 1, **dadurch gekennzeichnet, dass** anhand weiterer, jeweils in verschiedenen Abschnitten des Ventilstellbereichs nahe bei geschlossener Stellung des Ventils (2) während eines Schließvorgangs und/oder während eines Öffnungsvorgangs aufgenommener Verläufe weitere Werte der Kenngröße ermittelbar sind und dass der zweite Wert (w2) in Abhängigkeit der weiteren Werte ermittelbar ist.

3. Diagnosesystem nach Anspruch 1 oder 2, **dadurch gekennzeichnet, dass** von zumindest zwei der Größen Amplitude, Spitzenwert, Effektivwert, Scheitelfaktor oder in verschiedenen Frequenzbändern Leistungsdichten oder Amplituden diejenige bestimmbar und als Kenngröße auswählbar ist, bei welcher sich der erste Wert (w1) von dem zweiten Wert (w2) am deutlichsten unterscheidet.

4. Diagnoseverfahren für ein von einem Stellungsregler (9) über einen Antrieb (6) betätigbares Ventil (2) mit einem Aufnehmer (12) für Körperschall und mit einer Einrichtung (14) zur Auswertung des aufgenommenen Messsignals (13) des Körperschalls, **dadurch gekennzeichnet,**
**dass** bei einer Kalibrierung anhand eines ersten, bei geschlossener Stellung des Ventils (2) aufgenommenen Verlaufs des Messsignals (13) ein erster Wert (w1) einer Kenngröße ermittelt wird,
**dass** im Betrieb des Ventils (2) anhand zumindest eines zweiten, in einem Abschnitt des Ventilstellbereichs nahe bei geschlossener Stellung des Ventils (2) aufgenommenen Verlaufs zumindest ein zweiter Wert (w2) der Kenngröße und anhand eines dritten, bei geschlossener Stellung des Ventils (2) aufgenommenen Verlaufs des Messsignals (13) ein dritter Wert (w3) der Kenngröße ermittelt werden,
**dass** ein Meldesignal erzeugt wird zur Anzeige, dass keine Diagnose einer Leckage möglich ist, wenn die Abweichung des zweiten Werts (w2) vom ersten Wert (w1) einen vorgebbaren ersten Schwellwert nicht überschreitet,
**dass** in Abhängigkeit des ersten Werts (w1) und des zweiten Werts (w2) ein zweiter Schwellwert für eine zulässige Abweichung des dritten Werts (w3) vom ersten Wert (w1) bestimmt wird und
**dass** ein Fehlermeldesignal erzeugt wird, wenn die Abweichung des zweiten Werts (w2) vom ersten Wert (w1) den ersten Schwellwert überschreitet und wenn die Abweichung des dritten Werts (w3) vom ersten Wert (w1) den zweiten Schwellwert übersteigt.

## Claims

1. Diagnostic system for a valve (2) which can be actuated by a positioner (9) by way of a drive (6), said valve having a sensor (12) for detecting structure-borne noise and having a device (14) for evaluating the recorded measured signal (13) of the structure-borne noise,
**characterised in that** the device (14) for evaluating is embodied in such a way that a first value (w1) of a characteristic quantity can be determined in the device (14) in the course of a calibration process based on a first waveform of the measured signal (13) recorded with the valve (2) in the closed position,
that during operation of the valve at least one second value (w2) of the characteristic quantity can be determined based on at least one second waveform recorded in a section of the valve positioning range close to the closed position of the valve (2), and a third value (w3) of the characteristic quantity can be determined based on a third waveform of the measured signal (13) recorded with the valve (2) in the closed position (w2),
that a status signal can be generated to indicate that no diagnosis of a leakage is possible if the deviation of the second value from the first value does not exceed a predefinable first threshold value,
-that a second threshold value for a permissible deviation of the third value (w3) from the first value (w1) can be determined as a function of the first value (w1) and the second value (w2) and
that a fault reporting signal can be generated by the device (14) if the deviation of the second value (w2) from the first value (w1) exceeds the first threshold value and if the deviation of the third value (w3) from the first value (w1) exceeds the second threshold value.

2. Diagnostic system according to claim 1,
**characterised in that** further values of the characteristic quantity can be determined based on further waveforms in each case recorded in different sections of the valve positioning range close to the closed position of the valve (2) during a closing operation and/or during an opening operation and that the second value (w2) can be determined as a function of the further values.

3. Diagnostic system according to claim 1 or 2,
**characterised in that** from at least two of the parameters amplitude, peak value, effective value, peak factor or, in different frequency bands, power densities or amplitudes that parameter can be determined and selected as a characteristic quantity in which the first value (w1) differs most clearly from the second value (w2).

4. Diagnostic method for a valve (2) which can be actuated by a positioner (9) by way of a drive (6), said valve having a sensor (12) for detecting structure-borne noise and having a device (14) for evaluating the recorded measured signal (13) of the structure-borne noise,
**characterised in that** in the course of a calibration process based on a first waveform of the measured signal (13) recorded with the valve (2) in the closed position a first value (w1) of a characteristic quantity is determined, that during operation of the valve (2) at least a second value (w2) of the characteristic quantity is determined based on at least one second waveform recorded in a section of the valve positioning range close to the closed position of the valve (2), and a third value (w3) of the characteristic quantity is determined based on a third waveform of the measured signal (13) recorded with the valve (2) in the closed position,
that a status signal is generated to indicate that no diagnosis of a leakage is possible if the deviation of the second value (w2) from the first value (w1) does not exceed a predefinable first threshold value,
that a second threshold value for a permissible deviation of the third value (w3) from the first value (w1) is determined as a function of the first value (w1) and the second value (w2) and
that a fault reporting signal is generated if the deviation of the second value (w2) from the first value (w1) exceeds the first threshold value and if the deviation of the third value (w3) from the first value (w1) exceeds the second threshold value.

## Revendications

1. Système de diagnostic pour une vanne (2) pouvant être actionnée par un régleur (9) de position par l'intermédiaire d'un entraînement (6)
comprenant un enregistreur (12) du bruit de corps et
comprenant un dispositif (14) d'exploitation du signal (13) de mesure enregistré du bruit de corps, **caractérisé en ce que** le dispositif (14) d'exploitation est tel qu'il peut être déterminé dans le dispositif (14), lors d'un étalonnage au moyen d'une première courbe du signal (13) de mesure enregistrée en la position fermée de la vanne (2), une première valeur (w1) d'une grandeur caractéristique,
**en ce qu'**en fonctionnement de la vanne peuvent être déterminés, au moyen d'au moins une deuxième courbe enregistrée dans une partie de la plage de réglage de la vanne proche de la position fermée de la vanne (2), au moins une deuxième valeur (w2) de la grandeur caractéristique et, au moyen d'une troisième courbe du signal (11) de mesure enregistrée en la position fermée de la vanne (2), une troisième valeur (w3) de la grandeur caractéristique,
**en ce qu'**un signal d'avertissement peut être produit pour indiquer qu'un diagnostic d'une fuite n'est pas possible si l'écart de la deuxième valeur à la première valeur ne dépasse pas une première valeur de seuil qui peut être prescrite,
**en ce qu'**en fonction de la première valeur (w1) et de la deuxième valeur (w2), il peut être déterminé une deuxième valeur de seuil pour un écart admissible de la troisième valeur (w3) à la première valeur (w1) et
**en ce qu'**il peut être produit par le dispositif (14) un signal indicateur de défaut, si l'écart de la deuxième valeur (w2) à la première valeur (w1) dépasse la première valeur de seuil et si l'écart de la troisième valeur (w3) à la première valeur (w1) excède la deuxième valeur de seuil.

2. Système de diagnostic suivant la revendication 1, **caractérisé en ce qu'**au moyen d'autres courbes enregistrées respectivement dans des parties différentes de la plage de réglage de la vanne près de la position fermée de la vanne (2) pendant un processus de fermeture et/ou un processus d'ouverture, il peut être déterminé d'autres valeurs de la grandeur caractéristique et **en ce que** la deuxième valeur (W2) peut être déterminée en fonction des autres valeurs.

3. Système de diagnostic suivant la revendication 1 ou 2, **caractérisé en ce qu'**à partir d'au moins deux des grandeurs, amplitudes, valeurs de pointe, valeurs efficaces, facteurs de crête ou dans des bandes de fréquence différentes, il peut être déterminé des densités de puissance ou des amplitudes et il peut être choisi des grandeurs caractéristiques pour lesquelles la première valeur (w1) se distingue le plus nettement de la deuxième valeur (w2).

4. Procédé de diagnostic pour une vanne (2) pouvant être actionnée par un régleur (9) de position par l'intermédiaire d'un entraînement (6) comprenant un enregistreur (12) du bruit de corps et un dispositif (14) d'exploitation du signal (13) de mesure enregistré du bruit de corps, **caractérisé**
**en ce que** lors d'un étalonnage, on détermine une première valeur (w1) d'une grandeur caractéristique au moyen d'une première courbe du signal (11) de mesure enregistrée en la position fermée de la vanne (2),
**en ce que**, lorsque la vanne (2) fonctionne, on détermine, au moyen d'au moins une deuxième courbe enregistrée dans une partie de la plage de réglage de la vanne proche de la position de fermeture de la vanne (2), au moins une deuxième valeur (w2) de la grandeur caractéristique et, au moyen d'une troisième courbe du signal (13) de mesure enregistrée en la position fermée de la vanne (2), une troisième valeur (w3) de la grandeur de mesure,
**en ce que** l'on produit un signal d'indication pour indiquer qu'un diagnostic d'une fuite n'est pas possible si l'écart de la deuxième valeur (w2) à la première valeur (w1) ne dépasse pas une première valeur de seuil pouvant être prescrite,
**en ce qu'**on détermine en fonction de la première valeur (w1) et de la deuxième valeur (w2) une deuxième valeur de seuil pour un écart admissible de la troisième valeur (w3) à la première valeur (w1),
**en ce que** l'on produit un signal d'indication de défaut, si l'écart de la deuxième valeur (w2) à la première valeur (w1) dépasse la première valeur de seuil et si l'écart de la troisième valeur (w3) à la première valeur (w1) excède la deuxième valeur de seuil.
